# FASCICULE DE BREVET EUROPEEN

(11) **EP 0 503 998 B1**
(45) Date de publication et mention de la délivrance du brevet: **22.11.1995**
(21) Numéro de dépôt: 92400537.4
(22) Date de dépôt: 03.03.1992
(51) Int. Cl.: C03C 27/12, B32B 17/10

(54) **Vitrage feuilleté**
Verbundglasscheibe
Laminated glazing

(30) Priorité: 08.03.1991 FR 9102794
(43) Date de publication de la demande: 16.09.1992
(73) Titulaire: SAINT-GOBAIN VITRAGE, 92400 Courbevoie (FR)
(72) Inventeur: Naoumenko, Yves, F-45460 Les Bordes (FR); Chaussade, Pierre, F-45600 Sully Sur Loire (FR)
(74) Mandataire: Muller, René

(56) Documents cités:
- FR-A- 1 390 519
- US-A- 3 081 205
- US-A- 4 130 684

## Description

La présente invention concerne un vitrage feuilleté pour véhicule de transport, en particulier un pare-brise pour avion.

Dans les vitrages feuilletés pour avions comprenant deux feuilles de verre trempées thermiquement ou chimiquement, la couche intercalaire thermoplastique utilisée est constituée généralement par plusieurs plis en polyvinylbutyral plastifié (désigné par la suite dans la description par PVB). Le choix du PVB provient de ce que le PVB présente un module en traction élevé et un allongement à la rupture important et qu'il peut remplir un rôle d'absorbeur d'énergie tout en assurant l'étanchéité d'un vitrage dans lequel toutes les feuilles de verre sont brisées.

Lorsqu'un tel vitrage feuilleté est placé dans les conditions habituelles d'un vol à haute altitude, il est soumis d'une part à des différences de pressions importantes entre ses deux faces, et d'autre part à des différences de températures également importantes entre ces mêmes faces. Comme le PVB présente un coefficient de dilatation bien supérieur à celui des feuilles de verre, le vitrage est soumis dès lors à des contraintes notamment à des contraintes en cisaillement importantes, s'exerçant surtout au niveau des bords du vitrage. Ces contraintes élevées peuvent encore être augmentées lorsque le vitrage est soumis à des chocs, en particulier à basse température, par exemple lors d'impacts d'oiseaux, le PVB présentant à ces basses températures inférieures à 0°C, un module en traction fortement augmenté.

Le problème lié aux contraintes est encore accentué lorsque l'intercalaire comporte, noyé dans ses bords, une ceinture périphérique métallique ou en une matière stratifiée, augmentant la rigidité du vitrage et/ou permettant ou facilitant le cas échéant un montage, par boulonnage par exemple, du vitrage dans la baie de carrosserie du cockpit.

Des solutions ont déjà été proposées pour diminuer les contraintes évoquées ci-dessus, et pour réduire par conséquent les risques de défaillance du vitrage. Une des solutions consiste à appliquer un matériau agissant comme séparateur dans la partie marginale du vitrage. Cette solution peut convenir pour des vitrages de faibles dimensions. Elle n'est cependant pas satisfaisante pour des vitrages de la taille d'un pare-brise d'avion. En outre, les matériaux séparateurs peuvent favoriser la pénétration de l'humidité dans l'intercalaire PVB, entrainant des pertes d'adhésion en des emplacements non désirés, ainsi que des pertes des qualités optiques du vitrage, en particulier de la transparence. En plus, les matériaux séparateurs ne présentent pas la qualité optique des couches employées dans les vitrages feuilletés, et leur utilisation réduit le champ de vision du vitrage.

On a aussi proposé, d'après la publication de brevet FR-A-2 310 979 de placer un film continu en polyuréthane entre la couche de PVB et la feuille de verre. Le film de polyuréthane dévie l'effort de cisaillement réduisant ainsi l'effet de la contraction thermique du PVB.

Cette solution présente encore des inconvénients. Elle nécessite généralement une activation de l'adhésion pour le polyuréthane sur la totalité de la surface de contact avec le verre. Elle implique en outre un interface supplémentaire entre deux produits thermoplastiques différents, en particulier d'indices de réfraction différents, ce qui peut induire à nouveau des défauts optiques dans le vitrage.

L'invention obvie aux inconvénients cités. Elle propose une nouvelle structure de vitrage feuilleté qui présente les propriétés mécaniques et optiques recherchées et qui se conservent dans le temps et dans des conditions de températures et de pressions extrêmes.

Le vitrage selon l'invention comprend deux feuilles de verre séparées par un intercalaire en matière plastique de type PVB, au moins un anneau étant disposé entre l'intercalaire et une feuille de verre dans la partie marginale du vitrage, cet anneau présentant des propriétés d'adhésion avec l'intercalaire et avec le verre, et étant formé d'une matière plastique présentant des propriétés d'allongement supérieures à celles de l'intercalaire, ainsi qu'un module au cisaillement plus faible.

La feuille de verre au contact de l'anneau peut être la feuille de verre destinée à être orientée vers l'extérieur ou au contraire celle destinée à être orientée vers l'intérieur.

Par matière plastique de type PVB, on entend selon l'invention des matières plastiques ayant des propriétés et caractéristiques semblables à celles du PVB, ainsi qu'un comportement équivalent à celui du PVB dans un vitrage avion.

En tant que matière plastique de type PVB, on peut citer par exemple des matières thermoplastiques tel le PVB plastifié, le chlorure de polyvinyle, etc... Dans la suite de la description nous utiliserons le terme PVB par soucis de simplification.

Dans une forme de réalisation préférée, le vitrage selon l'invention comprend des anneaux en matière plastique, disposés entre chacune des faces du PVB et les feuilles de verre.

Lorsque le vitrage comporte plus de deux feuilles de verre, on peut prévoir un anneau comme décrit précédemment à chaque interface verre-PVB.

La matière plastique formant l'anneau peut être choisie parmi des élastomères thermodurcissables notamment des silicones thermodurcissables, des polyuréthanes thermodurcissables, des élastomères thermoplastiques notamment des polyuréthanes thermoplastiques.

Ces matières plastiques pouvant être utilisées selon l'invention présentent un allongement à la rupture compris entre 200 et 700 % et de préférence entre 300 et 600 % et un module au cisaillement compris entre 1 et 100 MPa et de préférence entre 10 et 80 MPa, ces valeurs étant des valeurs mesurées pour des températures comprises entre -30°C et 40°C environ.

L'anneau en matière plastique doit présenter des dimensions lui permettant d'absorber et surtout de transmettre progressivement les contraintes au cisaillement auxquelles est soumis l'intercalaire en PVB lorsque le vitrage est soumis aux conditions évoquées ci-dessus.

L'épaisseur de l'anneau peut être comprise entre 0,2 mm et 2 mm. Cette épaisseur dépend de celle de l'intercalaire PVB. Selon une caractéristique avantageuse de l'invention, l'épaisseur de l'anneau est de préférence comprise entre 5 et 15 % de l'épaisseur du PVB séparant les deux feuilles de verre.

La largeur de l'anneau est par exemple comprise entre 15 et 100 mm. Cette largeur dépend également des dimensions du vitrage. Elle est généralement comprise entre 2 et 15 % de ces dimensions en longueur ou en largeur. La largeur de l'anneau peut aussi varier le long du pourtour d'un même vitrage selon sa forme et ses dimensions.

Pour éviter des contraintes localisées au niveau du bord intérieur de l'anneau, selon une caractéristique de l'invention, l'épaisseur du bord de cet anneau décroit progressivement vers la face du verre. Lorsqu'il est formé de plusieurs plis, la structure du bord peut être une structure en marches d'escalier, la hauteur de chaque marche correspondant à l'épaisseur de chaque pli, qui de préférence est inférieure à 0,5 mm. Lorsqu'il est formé d'un seul pli, la structure de bord peut présenter une forme en biseau. L'angle d'inclinaison de la ligne de décroissance du bord est de préférence inférieur à 45°.

Comme décrit précédemment, une caractéristique importante de l'anneau selon l'invention est qu'il présente des propriétés adhésives avec le verre et avec le PVB. Lorsque la matière plastique qui le constitue ne présente pas les propriétés adhésives suffisantes, il est nécessaire d'améliorer ces propriétés par l'utilisation d'un primaire ou tout autre traitement adapté. On peut ainsi traiter la surface du verre au contact de l'anneau à l'aide d'un promoteur d'adhésion tel un amino-silane. L'adhérence de l'anneau avec le verre doit être du même ordre de grandeur que celles du PVB avec le verre dans les vitrages pour avions.

Lorsque le vitrage comporte une ceinture (ou insert) périphérique métallique ou à base de fibres synthétiques, noyée partiellement dans le PVB, et destinée généralement a être percée pour permettre le montage par boulonnage du vitrage sur le cockpit, l'anneau (ou les anneaux) utilisé(s) conformément à l'invention présente(nt) une largeur telle qu'il(s) s'étend(ent) intérieurement au delà de la profondeur de prise de la ceinture dans l'intercalaire sur une distance de préférence d'au moins 5 mm. Cette structure permet d'absorber les différentes contraintes supplémentaires créées par la ceinture, telles qu'effet de levier, pont thermique, etc...

Comme décrit précédemment, l'intercalaire en PVB est formé de plusieurs plis. Dans ce cas, ce peuvent être des plis à base d'un même PVB, c'est-à-dire d'un PVB plastifié avec un même plastifiant et avec un taux de plastifiant identique. Ce peut être aussi et avantageusement une association de plusieurs plis de PVB présentant des teneurs en plastifiant différentes.

Le vitrage selon l'invention peut aussi être un vitrage chauffant et à cette fin, au moins une face d'une feuille de verre peut être munie d'une résistance électrique chauffante ou au contact d'une telle résistance. Ce peut être une couche conductrice continue déposée sur la face du verre ou un réseau de fils fins métallique de résistance électrique incrusté dans l'intercalaire au contact de ladite feuille de verre.

Les feuilles de verre peuvent être en verre trempé thermiquement ou chimiquement.

D'autres avantages et caractéristiques de l'invention apparaîtront dans la description suivante d'exemples de réalisation.

La figure 1 est une vue en coupe d'un vitrage selon l'invention.

La figure 2 est une vue en coupe d'une variante d'un vitrage selon l'invention, munie d'une ceinture périphérique.

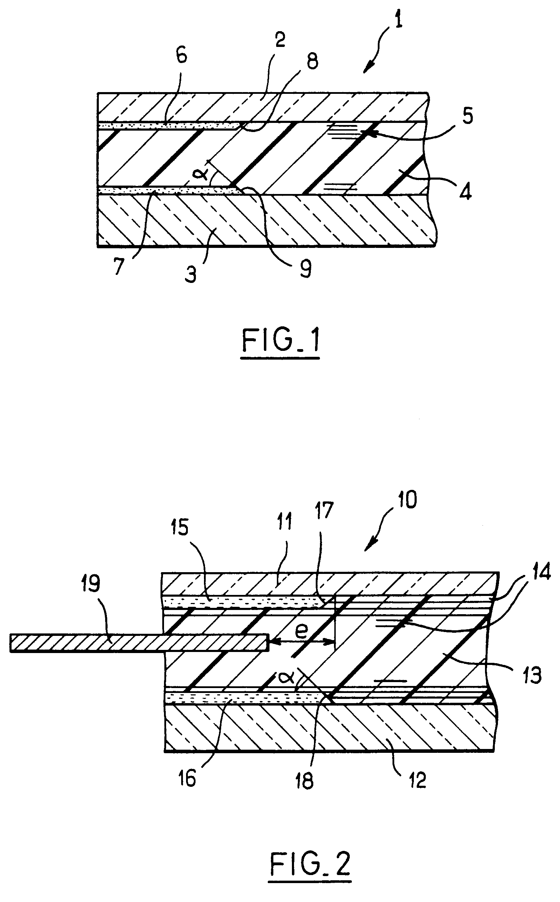

La figure 1 représente un vitrage 1 selon l'invention formé de deux feuilles de verre trempées thermiquement, une feuille de verre extérieure 2 et une feuille de verre intérieure 3 entre lesquelles est disposé un intercalaire 4 de mêmes dimensions que les deux feuilles de verre, formé de plusieurs plis 5 de PVB. En périphérie du vitrage, entre les interfaces verre-PVB, sont prévus deux anneaux 6, 7 en polyuréthane. Le polyuréthane est par exemple un élastomère thermodurcissable, obtenu par injection ou moulage. Ce polyuréthane présente un allongement à la rupture de 350 % et un module au cisaillement de 60 MPa mesurés à une température de -30°C. Ce polyuréthane adhère au verre et au PVB. Les valeurs d'adhésion mesurées d'après le test de pelage décrit ci-après est de 15 daN/cm pour l'adhésion polyuréthane-verre.

Les valeurs d'adhésion, sont mesurées à partir d'éprouvettes en verre de 8 x 8 cm revêtues d'une couche obtenue à partir du polyuréthane formant l'anneau. On découpe une languette de 1 cm de large dans la couche de revêtement et on la décolle sur 3 cm.

Le test proprement dit consiste à tirer sur la languette, perpendiculairement à la surface du verre, à une vitesse de traction de 2 cm/mn. On mesure la force nécessaire pour le pelage.

Ces anneaux 6, 7 présentent par exemple une épaisseur de 1 mm alors que l'épaisseur du PVB en dehors de la zone annulaire est de 10 mm. La largeur d'un anneau est par exemple de 20 mm alors que le vitrage présente des dimensions en longueur et en largeur de l'ordre de 500 mm.

Les bords intérieurs 8, 9 des anneaux présentent une forme en biseau, l'angle α étant de préférence inférieur à 45°, et ici par exemple de 20 degrés environ. Cette diminution progressive de l'épaisseur de l'anneau procurée par cette forme en biseau évite tout risque de distorsion optique et procure une meilleure liaison verre-polyuréthane PVB.

La figure 2 représente en coupe un pare-brise 10 pour avion, formé de deux feuilles de verre trempé thermiquement, une feuille de verre 11 extérieure et une feuille de verre intérieure 12, reliées par un intercalaire 13, de mêmes dimensions que les deux feuilles de verre, en PVB formé de plusieurs plis, par exemple 20 plis intérieurs 14, de 0,5 mm d'épaisseur en PVB à 19 parties en poids de plastifiant.

Deux anneaux 15, 16 en polyuréthane thermoplastique sont disposés en périphérie du vitrage entre l'intercalaire 13 et les feuilles de verre 11, 12. Ces anneaux sont obtenus par moulage. Le polyuréthane est un polyester uréthane. Les bords intérieurs 17, 18 des anneaux sont découpés en forme de biseau, l'angle α du biseau étant de 20° environ.

Une ceinture périphérique 19, de 2 mm d'épaisseur, est noyée partiellement, sur une profondeur d'environ 30 mm par exemple dans l'intercalaire. Cette ceinture peut être en un métal inoxydable, en aluminium, ou à base d'une structure fibreuse, et elle est destinée à être percée pour le montage par boulonnage du vitrage à la structure de l'avion.

Comme représentés sur la figure, les anneaux s'étendent vers l'intérieur du vitrage au delà de l'extrémité de la ceinture métallique, d'une distance e, de préférence supérieure à 5 mm.

L'épaisseur d'un anneau est de 1 mm environ, ce qui correspond à l'épaisseur de 2 plis de PVB.

La structure du vitrage décrite ci-dessus permet d'absorber les mouvements de la ceinture périphérique ainsi que les différentes contraintes évoquées précédemment dans les conditions d'utilisation du vitrage à haute altitude.

## Revendications

1. Vitrage feuilleté (1) notamment pare-brise d'avion comprenant au moins deux feuilles (2, 3) de verre liées par un intercalaire (4) en matière plastique du type polyvinylbutyral, caractérisé en ce qu'il comprend dans la partie marginale du vitrage, entre au moins une feuille de verre et l'intercalaire, au moins un anneau (6, 7) en une matière plastique présentant un module en cisaillement plus faible que celui de l'intercalaire, des propriétés d'allongement supérieures à celles de l'intercalaire et des propriétés adhésives avec l'intercalaire (4) et le verre (2, 3).

2. Vitrage feuilleté selon la revendication 1, caractérisé en ce qu'il comprend un anneau en matière plastique à chacune des deux interfaces verre-intercalaire.

3. Vitrage feuilleté selon une des revendications 1 à 2, caractérisé en ce que l'épaisseur de l'anneau correspond à une épaisseur comprise entre 5 et 15 % de l'épaisseur de l'intercalaire.

4. Vitrage feuilleté selon une des revendications 1 à 3, caractérisé en ce que la largeur de l'anneau est comprise entre 2 et 15 % des dimensions du vitrage.

5. Vitrage feuilleté selon une des revendications 1 à 4, caractérisé en ce que l'épaisseur du bord intérieur de l'anneau décroit progressivement vers la face du verre.

6. Vitrage feuilleté selon la revendication 5, caractérisé en ce que l'angle de la tangente à la décroissance de l'épaisseur de l'anneau est inférieur à 45 degrés.

7. Vitrage feuilleté selon une des revendications 1 à 6, caractérisé en ce que la matière plastique formant l'anneau est choisie parmi les élastomères thermodurcissables du groupe des silicones, polyuréthanes et les élastomères thermoplastiques.

8. Vitrage feuilleté selon une des revendications 1 à 7, caractérisé en ce que l'anneau est obtenu par moulage.

9. Vitrage feuilleté selon une des revendications 7 ou 8, caractérisé en ce qu'il est en polyuréthane thermoplastique.

10. Vitrage selon une des revendications 1 à 9, caractérisé en ce que l'anneau présente un allongement à la rupture compris entre 200 et 700 % et un module au cisaillement compris entre 1 et 100 MPa, entre -30°C et 40°C.

11. Vitrage selon la revendication 10, caractérisé en ce que l'anneau présente un allongement à la rupture compris entre 300 et 600 % et un module au cisaillement compris entre 10 et 80 MPa, entre -30°C et 40°C.

12. Vitrage selon une des revendications 1 à 11, caractérisé en ce que les propriétés adhésives de l'anneau avec l'intercalaire et le verre sont du même ordre de grandeur que celles de l'intercalaire avec le verre dans un vitrage avion.

13. Vitrage selon une des revendications 1 à 12, caractérisé en ce qu'il comprend une ceinture noyée partiellement dans l'intercalaire en PVB.

14. Vitrage selon la revendication 13, caractérisé en ce que l'anneau s'étend sur une largeur supérieure à la largeur de la partie noyée de la ceinture.

15. Vitrage selon la revendication 14, caractérisé en ce que l'anneau s'étend au dela de l'extrémité de la ceinture d'une distance supérieure à 5 mm.

16. Vitrage selon une des revendications 1 à 15, caractérisé en ce qu'il comporte une résistance électrique chauffante.

## Claims

1. Laminated glazing pane (1), notably aircraft windscreen, comprising at least two glass sheets (2, 3) connected together by an intermediate film (4) of plastics material of the polyvinyl butyral type, characterized in that it comprises, in the marginal part of the pane, between at least one glass sheet and the intermediate film, at least one ring (6, 7) of a plastics material having a shear modulus smaller than that of the intermediate film, elongation properties better than those of the intermediate film and properties of adhesion to the intermediate film (4) and to the glass (2, 3).

2. Laminated glazing pane according to Claim 1, characterized in that it comprises a ring of plastics material at each of the two glass-intermediate film interfaces.

3. Laminated glazing pane according to one of Claims 1 and 2, characterized in that the thickness of the ring corresponds to a thickness of from 5 to 15% of the thickness of the intermediate film.

4. Laminated glazing pane according to one of Claims 1 to 3, characterized in that the width of the ring is from 2 to 15% of the dimensions of the pane.

5. Laminated glazing pane according to one of Claims 1 to 4, characterized in that the thickness of the inner edge of the ring decreases progressively towards the face of the glass.

6. Laminated glazing pane according to Claim 5, characterized in that the angle of the tangent to the decrease in the thickness of the ring is less than 45°.

7. Laminated glazing pane according to one of Claims 1 to 6, characterized in that the plastics material forming the ring is chosen from among the thermosetting elastomers of the group of the silicones, polyurethanes and the thermoplastic elastomers.

8. Laminated glazing pane according to one of Claims 1 to 7, characterized in that the ring is produced by moulding.

9. Laminated glazing pane according to one of Claims 7 or 8, characterized in that it is of thermoplastic polyurethane.

10. Glazing pane according to one of Claims 1 to 9, characterized in that the ring has an elongation at rupture between 200 and 700% and a shear modulus from 1 to 100 MPa, between -30°C and +40°C.

11. Glazing pane according to Claim 10, characterized in that the ring has an elongation at rupture between 300 and 600% and a shear modulus between 10 and 80 MPa, between -30°C and +40°C.

12. Glazing pane according to one of Claims 1 to 11, characterized in that the adhesive properties of the ring to the intermediate film and to the glass are of the same order of magnitude as those of the intermediate film to the glass in an aircraft pane.

13. Glazing pane according to one of Claims 1 to 12, characterized in that it comprises a band partly embedded in the intermediate film of PVB.

14. Glazing pane according to Claim 13, characterized in that the ring extends over a width greater than the width of the embedded part of the band.

15. Glazing pane according to Claim 14, characterized in that the ring extends beyond the edge of the band by a distance greater than 5 mm.

16. Glazing pane according to one of Claims 1 to 15, characterized in that it comprises a heating electrical resistor.

## Patentansprüche

1. Verbundverglasung (1), insbesondere eine Flugzeugwindschutzscheibe, welche wenigstens zwei Glasscheiben (2, 3) umfaßt, die durch eine Zwischenschicht (4) aus Kunststoff vom Typ Polyvinylbutyral miteinander verbunden sind, **dadurch gekennzeichnet, daß** sie in ihrem Randbereich zwischen wenigstens einer Glasscheibe und der Zwischenschicht wenigstens einen Ring (6, 7) aus einem Kunststoff enthält, der einen niedrigeren Gleitmodul als der der Zwischenschicht, bessere Dehnungseigenschaften als die der Zwischenschicht und Hafteigenschaften mit der Zwischenschicht (4) und dem Glas (2, 3) aufweist.

2. Verbundverglasung nach Anspruch 1, **dadurch gekennzeichnet, daß** sie auf jeder der beiden Grenzflächen Glas/Zwischenschicht einen Kunststoffring enthält.

3. Verbundverglasung nach Anspruch 1 oder 2, **dadurch gekennzeichnet, daß** die Ringdicke einer Dicke von 5 bis 15 % der Dicke der Zwischenschicht entspricht.

4. Verbundverglasung nach einem der Ansprüche 1 bis 3, **dadurch gekennzeichnet, daß** die Breite des Rings 2 bis 15 % der Abmessungen der Verglasung beträgt.

5. Verbundverglasung nach einem der Ansprüche 1 bis 4, **dadurch gekennzeichnet, daß** die Dicke des Innenrandes des Rings zur Glasseite zu fortlaufend abnimmt.

6. Verbundverglasung nach Anspruch 5, **dadurch gekennzeichnet, daß** der Winkel der Tangente an der abnehmenden Linie der Ringdicke unter 45 Grad liegt.

7. Verbundverglasung nach einem der Ansprüche 1 bis 6, **dadurch gekennzeichnet, daß** der den Ring bildende Kunststoff aus den duroplastischen Elastomeren der Gruppe der Silicone und Polyurethane und den thermoplastischen Elastomeren ausgewählt ist.

8. Verbundverglasung nach einem der Ansprüche 1 bis 7, **dadurch gekennzeichnet, daß** der Ring durch Gießen hergestellt ist.

9. Verbundverglasung nach Anspruch 7 oder 8, **dadurch gekennzeichnet, daß** er aus thermoplastischem Polyurethan besteht.

10. Verglasung nach einem der Ansprüche 1 bis 9, **dadurch gekennzeichnet, daß** der Ring bei -30 bis 40 °C eine Reißdehnung von 200 bis 700 % und einen Gleitmodul von 1 bis 100 MPa aufweist.

11. Verglasung nach Anspruch 10, **dadurch gekennzeichnet, daß** der Ring bei -30 bis 40 °C eine Reißdehnung von 300 bis 600 % und einen Gleitmodul von 10 bis 80 MPa aufweist.

12. Verglasung nach einem der Ansprüche 1 bis 11, **dadurch gekennzeichnet, daß** in einer Flugzeugverglasung die Hafteigenschaften des Rings mit der Zwischenschicht und dem Glas von derselben Größenordnung wie die der Zwischenschicht mit dem Glas sind.

13. Verglasung nach einem der Ansprüche 1 bis 12, **dadurch gekennzeichnet, daß** sie einen Gürtel enthält, der teilweise in die PVB-Zwischenschicht eingebettet ist.

14. Verglasung nach Anspruch 13, **dadurch gekennzeichnet, daß** sich der Ring über eine Breite erstreckt, die größer als die Breite des eingelagerten Teils des Gürtels ist.

15. Verglasung nach Anspruch 14, **dadurch gekennzeichnet, daß** sich der Ring ab dem Ende des Gürtels mit einem Abstand von über 5 mm erstreckt.

16. Verglasung nach einem der Ansprüche 1 bis 15, **dadurch gekennzeichnet, daß** sie einen elektrischen Heizwiderstand enthält.
